**Europäisches Patentamt**

**European Patent Office**

**Office européen des brevets**

(11) Numéro de publication : **0 373 081 B1**

# (12) FASCICULE DE BREVET EUROPEEN

(45) Date de publication du fascicule du brevet :
**13.05.92 Bulletin 92/20**

(51) Int. Cl.$^5$ : **B60N 2/12**

(21) Numéro de dépôt : **89420479.1**

(22) Date de dépôt : **04.12.89**

(54) **Siège escamotable notamment pour équipement de véhicules automobiles.**

(30) Priorité : **05.12.88 FR 8815892**

(43) Date de publication de la demande :
**13.06.90 Bulletin 90/24**

(45) Mention de la délivrance du brevet :
**13.05.92 Bulletin 92/20**

(84) Etats contractants désignés :
**AT BE CH DE ES GB GR IT LI LU NL SE**

(56) Documents cités :
**DE-A- 2 813 534**
**FR-A- 2 288 645**
**FR-A- 2 443 819**

(73) Titulaire : **CESA COMPAGNIE EUROPEENNE DE SIEGES POUR AUTOMOBILES
20, rue Paul-Vaillant-Couturier
F-92300 Levallois-Perret (FR)**

(72) Inventeur : **Chabanne, Jean-Pierre
319 rue de la Nivelle
F-45200 Amilly (FR)**
Inventeur : **Tricquet, Alain
32 rue de la Marée
F-95320 Saint-Leu-La-Foret (FR)**

(74) Mandataire : **Polus, Camille et al
c/o Cabinet Lavoix 2, Place d'Estienne d'Orves
F-75441 Paris Cedex 09 (FR)**

## Description

La présente invention est relative à un siège pouvant prendre plusieurs positions à savoir une position normale d'utilisation qui permet à une personne de s'asseoir et une position escamotée qui libère au moins en partie l'emplacement occupé par le siège en position normale. Un tel siège escamotable peut être utilisé sur des véhicules et notamment pour équiper l'avant des véhicules automobiles; il est particulièrement adapté pour l'équipement des sièges avant des véhicules automobiles n'ayant que deux portes latérales.

Le siège avant des véhicules automobiles comprend de façon générale une assise et un dossier, le siège étant fixé à la structure rigide du véhicule par l'intermédiaire de l'assise.

On connaît des versions escamotables de ces sièges qui sont utilisées par exemple pour permettre l'accès des passagers aux places arrière dans les véhicules automobiles n'ayant que deux portes latérales.

Une solution connue consiste à munir le siège d'un dossier articulé autour de l'assise, qui elle reste fixe, le dossier pouvant prendre deux positions extrêmes une rabattue sur l'assise et une normale.

Une autre solution connue pour obtenir l'escamotage d'un siège consiste à permettre à l'assise de prendre, grâce par exemple à une glissière à billes, plusieurs positions dont une position extrême avancée correspondant à la position escamotée et une position de service normal, le dossier gardant dans ce cas un angle fixe par rapport à l'assise.

Dans ces deux cas, soit que l'on rende mobile seulement le dossier ou seulement l'assise, la place laissée libre dans la position escamotée par rapport à la place occupée par le siège en position normale est relativement faible. C'est pourquoi sur certains modèles de sièges de véhicules on a cherché à combiner les changements de position du dossier et de l'assise en articulant le siège autour d'une charnière positionnée à l'avant de l'assise permettant ainsi à l'ensemble assise-dossier, le dossier gardant généralement un angle fixe par rapport à l'assise dans ce déplacement, de basculer autour de ladite charnière vers l'avant pour s'escamoter.

Cette solution présente l'inconvénient de nécessiter un grand espace disponible pour permettre le passage du dossier lors du basculement du siège vers l'avant et n'est de ce fait pas toujours utilisable dans une voiture automobile dite mini dans laquelle l'espace disponible est réduit. De plus elle nécessite souvent un blocage en position avancée pour éviter un retour incontrôlé en position normale du siège.

La demande de brevet FR-A-2443819 décrit un siège pour automobile ayant un dossier basculable vers l'avant, siège qui facilite l'accès des places arrière du véhicule. Un levier de blocage permet de maintenir le siège et son dossier en position d'utilisation. Un moyen de commande permet de déverrouiller l'assise et le dossier et de basculer l'ensemble vers l'avant. Les liaisons articulées entre le dossier et l'assise permettent de basculer simultanément l'un et l'autre vers l'avant.

L'utilisation de leviers pivotants, reliant l'assise au plancher du véhicule, nécessite davantage d'espace en hauteur pour faire passer le dossier de la position normale à la position escamotée car la partie arrière de l'assise est d'abord soulevée avant de se rabattre vers l'avant.

On a cherché avec le siège escamotable de la présente invention à combiner les mouvements de l'assise et du dossier de façon à libérer le maximum d'espace disponible tout en évitant les inconvénients des solutions précédemment décrites.

On a cherché en particulier un siège qui nécessite le moins d'espace possible pour passer de la position normale à la position escamotée.

On a cherché également à créer un siège dont le mécanisme de commande du mouvement d'escamotage soit le plus simple et le plus sûr possible.

Le siège escamotable selon l'invention est du type comprenant une armature rigide composée d'une assise et d'un dossier, l'assise étant montée directement ou indirectement sur un châssis par l'intermédiaire de biellettes articulées à une de leurs extrémités directement ou indirectement sur le châssis et à leurs autres extrémités directement ou indirectement sur l'assise, lesdites biellettes ayant leurs points d'articulation sur l'assise réparties entre l'avant et l'arrière de l'assise de façon à constituer entre les points d'articulation des biellettes avant et biellettes arrière au moins deux quadrilatères déformables permettant le passage de l'assise d'une position arrière stable à une position avant stable par rotation desdites biellettes.

Le dossier est monté sur l'assise par une liaison articulée permettant de faire varier l'angle du dièdre formé par l'assise et le dossier entre deux positions extrêmes stables.

Un premier moyen de verrouillage automatique, associé éventuellement à un premier moyen de butée assure le verrouillage en position arrière du dossier.

Un premier moyen de commande monté sur l'armature et qui peut être commandé par un utilisateur permet de libérer le premier moyen de verrouillage, le dossier pouvant alors librement se rabattre sur l'assise.

Un deuxième moyen de verrouillage automatique, associé éventuellement à un deuxième moyen de butée assure le verrouillage en position arrière de l'assise.

Un deuxième moyen de commande actionné directement ou indirectement par le dossier au cours de son mouvement de rabattement sur l'assise provoque la libération du deuxième moyen de verrouillage, permettant ainsi de basculer l'assise de sa position stable arrière à sa position stable avant, le dossier étant alors rabattu sur l'assise. Le siège est ainsi totalement escamoté.

De façon avantageuse les biellettes, quand le siège est en position normale, forment entre les points de rotation des biellettes avant et biellettes arrière une figure voisine d'un parallélogramme, l'angle que font les biellettes avant avec les biellettes arrière et leur longueur étant calculés de façon à donner à l'assise l'angle d'inclinaison voulu par rapport au châssis tant dans la position stable arrière que dans la position stable avant.

De façon avantageuse également les biellettes sont montées articulées sur les faces latérales de l'assise.

Il est intéressant de monter le premier moyen de verrouillage sur le dossier, par exemple sur les faces latérales, le verrouillage étant assuré entre l'assise et le dossier, ainsi que de monter dans ce cas le premier moyen de commande sur le dossier. On peut également en variante monter le premier moyen de verrouillage sur l'assise, le verrouillage étant toujours assuré entre assise et dossier, le premier moyen de commande étant monté sur l'assise.

En variante le premier moyen de verrouillage peut verrouiller le dossier directement au châssis.

Avantageusement le deuxième moyen de verrouillage peut être monté sur au moins une des biellettes assurant la liaison assise-châssis, ce moyen de verrouillage étant par exemple constitué par un crochet articulé sur la biellette venant engager un téton positionné sur le châssis ou sur l'assise.

En variante, le deuxième moyen de verrouillage peut être monté directement sur l'assise, par exemple sur une de ses faces latérales.

Avantageusement le deuxième moyen de commande sera actionné directement par le dossier au cours de son mouvement de rabattement sur l'assise et sera constitué par un câble dont une extrémité est fixée au dossier, l'autre extrémité étant fixée au deuxième moyen de verrouillage, la longueur et la position du câble étant calculées de sorte qu'il provoque l'ouverture dudit moyen de verrouillage lors du rabattement du dossier sur le siège sans pour autant s'opposer au dit mouvement de rabattement.

En variante, le deuxième moyen de commande qui libère le deuxième moyen de verrouillage peut être actionné indirectement par le dossier au cours de son mouvement de rabattement sur l'assise. Ceci peut être réalisé par exemple en munissant l'assise d'une butée mobile à retour élastique sur laquelle le dossier vient s'appuyer lorsque ledit dossier est suffisamment rabattu sur l'assise, l'appui du dossier conférant a la butée un petit déplacement, un câble de commande reliant ladite butée au deuxième moyen de verrouillage, la longueur et la position du câble étant telles que le déplacement de la butée par le dossier provoque l'ouverture du deuxième moyen de verrouillage.

Une solution particulièrement intéressante consiste à utiliser un deuxième moyen de verrouillage monté sur une biellette, et de préférence une biellette arrière, le câble étant relié d'une part à ce moyen de verrouillage et d'autre part au bas du dossier; de la sorte on peut utiliser un câble relativement court, le moyen de verrouillage accompagnant en quelque sorte l'assise dans le mouvement de basculement vers l'avant de celle-ci, le rabattement du dossier sur l'assise n'en est pas gêné.

L'automatisme des moyens de verrouillage peut être assuré par tout moyen, en particulier par des ressorts de rappel.

Une assistance au basculement de l'assise vers l'avant peut être réalisée par l'incorporation d'un ou plusieurs ressorts exerçant un ou des couples de rotation sur les biellettes dans le sens provoquant le déplacement de l'assise vers l'avant.

Le dossier indépendamment de sa liaison articulée sur l'assise peut comporter des moyens de réglage de son inclinaison par rapport à l'assise de façon à augmenter le confort de l'utilisateur.

Pour escamoter le siège ci-dessus décrit à partir de sa position arrière normale permettant à une personne de s'asseoir on actionne d'abord le premier moyen de commande qui permet de libérer le verrouillage du dossier qui peut être rabattu par simple pression manuelle. L'assise est jusqu'alors fixe et stable.

Ce mouvement de rabattement libère le deuxième moyen de verrouillage, le verrouillage de l'assise; celle-ci peut alors basculer sur sa position stable avant le dossier poursuivant son mouvement de rabattement vers l'assise ou restant rabattu sur l'assise.

De la sorte on obtient un escamotage le plus complet possible escamotage qui a demandé très peu d'espace compte tenu du fait que le siège a été déplacé dossier rabattu sur assise.

On décrira maintenant l'invention à l'aide de l'exemple et des figures ci-après qui permettront de mieux faire ressortir les caractéristiques du siège escamotable sans toutefois limiter la portée de l'invention.

La figure 1 est une vue latérale du siège suivant l'invention représenté en position d'utilisation normale.

La figure 2 est une vue latérale du siège de la figure 1 sur laquelle le dossier est représenté rabattu.

La figure 3 est une vue latérale du siège de la figure 1 représenté en position escamotée.

La figure 4 est une vue latérale de détail du système de verrouillage de l'assise du siège de la figure 1.

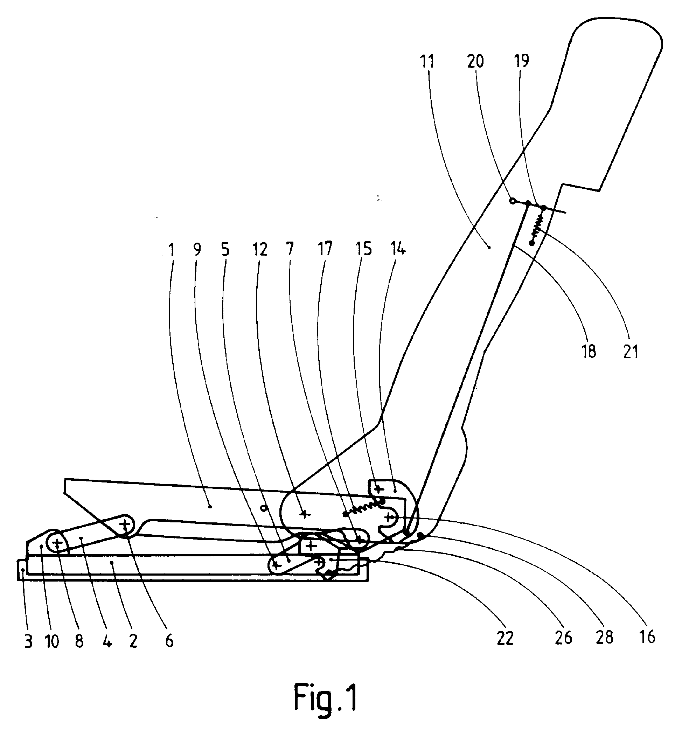

La figure 1 représente, de façon schématique, en vue latérale, l'armature rigide d'un siège selon l'invention en position arrière d'utilisation normale permettant à une personne de s'asseoir. Ce siège est un siège avant de véhicule automobile.

Cette armature est composée d'une assise 1 dont on voit une face latérale montée sur les pièces embouties en forme de cornières 2 reliées aux châssis par l'intermédiaire des glissières 3 disposées de chaque côté du siège.

Cette assise est représentée figure 1 en position arrière stable.

Le montage de l'assise 1 est réalisé par quatre biellettes, deux à l'avant de l'assise figurées en 4, deux à l'arrière de l'assise figurées en 5 et articulées respectivement en 6 et 7 aux faces latérales de l'assise et en 8 et 9 aux cornières 2. L'articulation 8 est disposée sur une patte 10 solidaire de la cornière 2.

Les biellettes quine sont ni forcément plates ni forcément droites peuvent ainsi tourner autour de leurs axes d'articulation d'une part par rapport à l'assise 1 et d'autre part par rapport aux cornières 2. Leurs axes d'articulation 6 - 7 - 8 - 9 - constituent en vue latérale un quadrilatère dont les petits côtés sont constitués par les biellettes et les grands côtés par l'assise et la cornière. Ici, en position d'utilisation normale, ce quadrilatère a une forme voisine d'un parallélogramme.

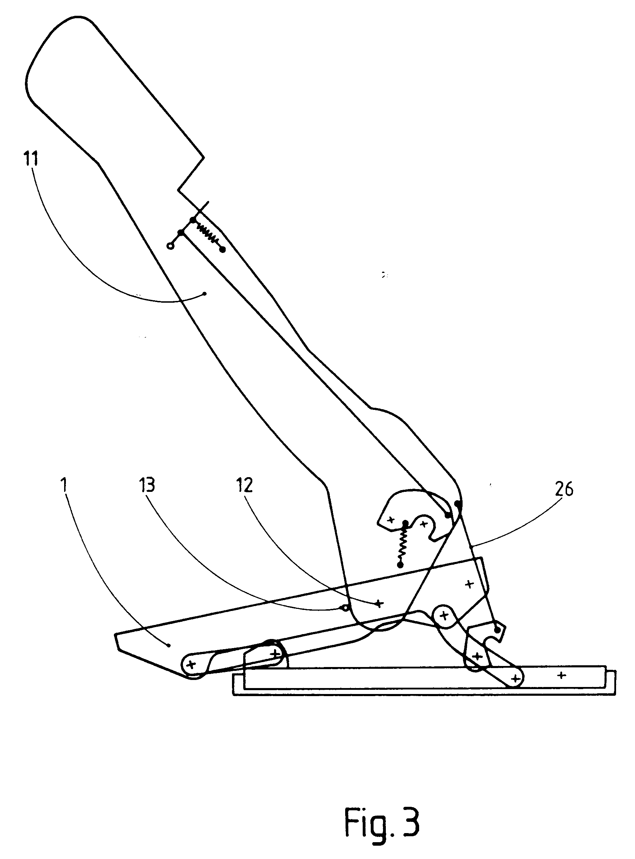

L'armature est également composée d'un dossier 11 dont on voit une face latérale montée sur l'assise 1. Ce dossier est articulé sur l'assise selon deux articulations 12. De la sorte le dièdre constitué par l'assise 1 et le dossier 11 et ayant pour arête l'axe fictif ou réel liant les deux articulations 12 peut varier son angle entre une valeur maximum correspondant au siège en position d'utilisation normale (figure 1) et une valeur minimale correspondant au rabattement maximum du dossier sur l'assise, le dossier venant alors se bloquer sur la butée 13 fixée sur l'assise (figure 3).

Un crochet 14 articulé en 15 sur le bas du dossier 11 permet de verrouiller automatiquement le dossier sur l'assise lors du retour en arrière du dossier grâce au téton 16, fixé sur l'arrière de l'assise 1, qui vient s'emboîter dans le creux du crochet 14, le ressort de rappel 17 permettant d'assurer l'automatisme du verrouillage et le maintien de ce verrouillage fermé.

L'ensemble crochet 14 téton 16 moyen de rappel 17 constitue le premier moyen de rappel automatique.

Pour simplifier la figure on a représenté sur toutes les figures l'angle inférieur droit du dossier 11 plein, cet angle devant bien sûr en pratique laisser le passage au téton 16 de l'assise 1.

On voit dans cet exemple que le verrouillage du dossier se fait sur l'assise.

Un premier moyen de commande constitué par le cable 18 et le levier 19 monté pivotant en 20 sur le dossier 11 et accessible par un utilisateur permet de dégager le crochet 14 du téton 16 et de libérer ainsi le mouvement de rabattement vers l'assise du dossier. Un ressort de rappel peut eventuellement être prévu en 21.

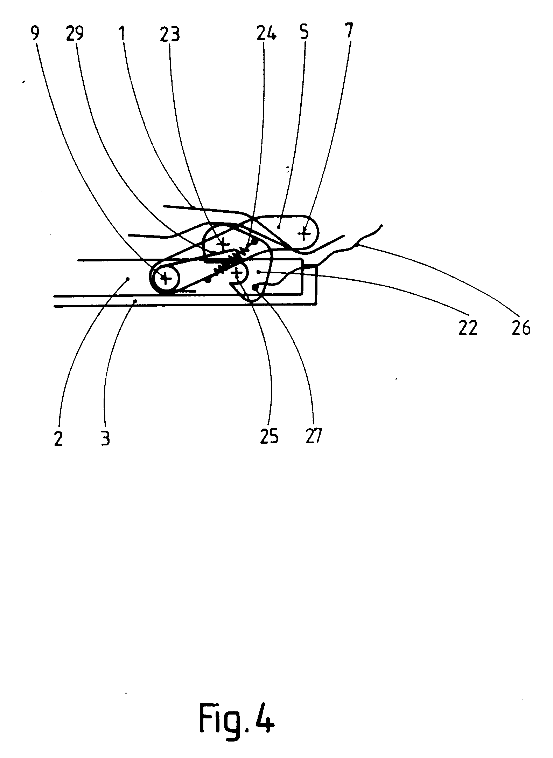

La figure 4 montre le détail du second moyen de verrouillage qui verrouille l'assise en position stable arrière. Ce verrouillage ici est fait par rapport au châssis par l'intermédiaire de la cornière 2.

Un crochet 22 articulé en 23 sur la biellette arrière 5 approximativement à mi-longueur de la ligne joignant les articulations 9 et 7 vient, grâce au ressort de rappel 24 monté entre biellettes 5 et crochet 22, se fermer sur le téton 25 fixé sur la cornière 2, lors du retour en position arrière de l'assise 1.

Dans le cas du présent mode de réalisation, le deuxième moyen de commande est constitué par le câble 26 fixé d'une part à l'extrémité 27 du crochet 22 opposée à son articulation 23 par rapport au téton 25 (figure 4) et d'autre part en 28 au bas du dossier 11.

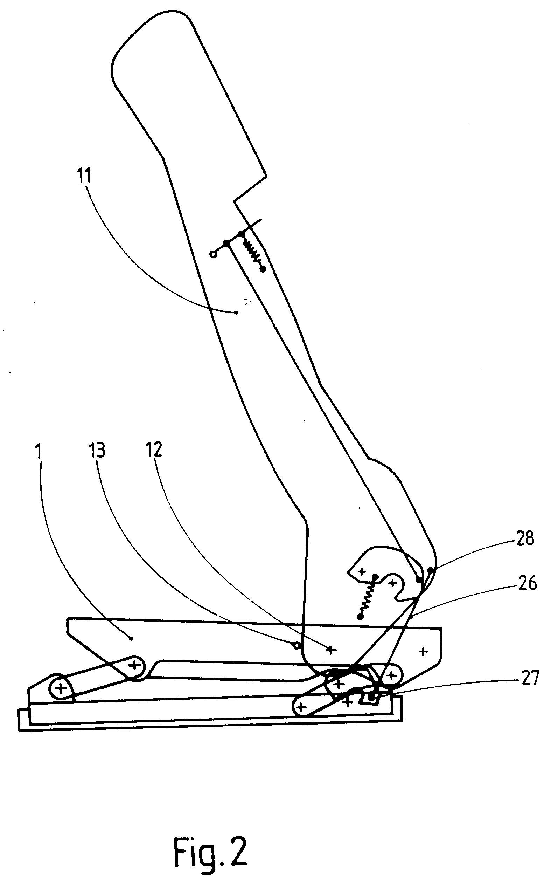

Ce câble 26 est d'une longueur telle que le rabattement du dossier 11 sur l'assise 1 par rotation autour de l'articulation 12 provoque, de préférence avant que le dossier vienne en butée sur la butée 13, la mise en tension du câble 26 donc l'ouverture du crochet 22 qui se libère du téton 25 (figure 2).

Un ressort, tel que 29, peut aider à créer un couple de basculement initial lors de la libération du verrouillage de l'assise en position arrière, facilitant ainsi la rotation de la biellette 5 autour de son articulation 9 pour basculer l'assise 1 vers l'avant.

L'utilisateur, après avoir commandé par le levier 19 la libération du dossier de l'assise, pourra donc grâce au deuxième moyen de commande décrit ci-dessus, par le simple mouvement de rabattement du dossier sur l'assise déverrouiller l'assise du châssis. En continuant la poussée sur le dossier il provoquera alors le basculement de l'assise vers l'avant autour des biellettes 4, 5.

La figure 3 représente le siège de la figure 1 totalement escamoté assise basculée et dossier rabattu sur l'assise.

La configuration géométrique particulière des biellettes permet dans le cas présent d'avoir une assise inclinée vers l'avant et bien entendu stable qui permet ainsi de dégager encore mieux l'espace disponible à l'arrière du siège. On voit que la disposition particulière du deuxième moyen de verrouillage permet de conserver au dossier la position rabattue sur l'assise lors du basculement de l'assise vers l'avant, malgré la présence du câble 26, ceci du fait que le crochet du deuxième moyen de verrouillage suit le mouvement vers l'avant des biellettes. Ceci ne serait pas le cas si le crochet du moyen de verrouillage était articulé sur une pièce fixe, par exemple la cornière 2.

Les deux moyens de verrouillage qui peuvent avantageusement être complétés par des moyens de butée assurent le verrouillage du siège en position normale (figure 1).

On voit donc que le siège selon l'invention, du fait de sa sécurité (verrouillage) de sa simplicité de commande (une commande unique permettant la manoeuvre du dossier et de l'assise) et du fait d'une position escamotée maximum, est particulièrement bien adapté pour être monté comme siège avant dans les véhicules automobiles n'ayant que deux portes latérales et particulièrement les modèles dits "mini" de ces véhicules. L'accès des passagers aux places arrière en sera facilité.

## Revendications

1. Siège escamotable du type comprenant une armature rigide composée d'une assise (1) et d'un dossier (11), l'assise étant montée directement ou indirectement sur un châssis par l'intermédiaire de biellettes articulées (4,5) réparties entre l'avant et l'arrière de l'assise (1) permettant le passage de l'assise d'une position arrière stable à une position avant stable, le dossier (11) étant monté sur l'assise (1) par une liaison articulée (12) des moyens permettant d'assurer le verrouillage en position arrière de l'assise et du dossier et des moyen de commande permettant de libérer cette assise et ce dossier afin de les faire passer de la position arrière stable à la position avant stable caractérisé en ce que le dossier comporte un premier moyen de verrouillage automatique (14,16) du dossier (11) en position arrière et un premier moyen de commande permettant de libérer ce dossier (11) et de le rabattre vers l'avant en réduisant l'angle qu'il fait avec l'assise et en ce qu'un deuxième moyen de commande actionné directement ou indirectement par le dossier au cours de son rabattement permet de libérer l'assise et de la basculer à son tour à partir de sa position stable arrière jusqu'à une position stable avant.

2. Siège selon revendication 1 caractérisé en ce que le deuxième moyen de commande (26) est actionné directement par le dossier (11) au cours de son mouvement de rabattement sur l'assise (1) et est constitué par un câble (26) dont une extrémité est fixée au dossier (11), l'autre extrémité étant fixée au deuxième moyen de verrouillage (22), la longueur et la position du câble (26) étant calculées de sorte qu'il provoque l'ouverture du deuxième moyen de verrouillage (22).

3. Siège selon revendication 1 ou 2 caractérisé en ce que le deuxième moyen de verrouillage (22) est monté sur au moins une des biellettes (5) assurant la liaison assise-châssis.

4. Siège selon revendication 3 caractérisé en ce que le deuxième moyen de verrouillage est constitué par un crochet (22) articulé sur une biellette (5) venant engager un téton (25) positionné sur le châssis ou sur l'assise.

5. Siège selon revendications 3 ou 4 caractérisé en ce que la biellette sur laquelle est monté le deuxième moyen de verrouillage est une biellette arrière (5).

6. Siège selon l'une des revendications 1 à 5 caractérisé en ce que le premier moyen de verrouillage (14,16) assure un verrouillage entre l'assise (1) et le dossier (11).

7. Siège selon revendication 6 caractérisé en ce que le premier moyen de commande (18) est monté sur le dossier.

8. Siège selon l'une des revendications 1 à 7 caractérisé en ce que l'automatisme du premier et/ou du deuxième moyen de verrouillage est assuré par des ressorts de rappel (17,24).

9. Siège selon l'une des revendications 1 à 8 caractérisé en ce que au moins un ressort (29) exerce un couple de rotation sur au moins une biellette dans le sens provoquant le déplacement de l'assise (1) vers l'avant.

10. Siège selon revendication 1 ou 2 caractérisé en ce que le deuxième moyen de verrouillage est monté directement ou indirectement sur l'assise (1).

## Patentansprüche

1. Klappbarer Sitz, enthaltend ein starres Gestell aus einem Sitzteil (1) und einer Rückenlehne (11), wobei das Sitzteil direkt oder indirekt auf einem Chassis mittels gelenkig gelagerter Schwingarme (4, 5) montiert ist, die vorne und hinten am Sitzteil (1) angeordnet sind und es erlauben, das Sitzteil zwischen einer hinteren stabilen Position und einer vorderen stabilen Position zu verstellen, wobei die Rückenlehne (11) an dem Sitzteil (1) mittels einer Gelenkverbindung (12) angebracht ist, wobei Einrichtungen vorgesehen sind, die eine Verriegelung in der hinteren Position des Sitzteils und der Rückenlehne bewirken, und Steuereinrichtungen vorgesehen sind, die es ermöglichen, dieses Sitzteil und diese Rückenlehne freizugeben, um sie aus der hinteren stabilen Position in die vordere stabile Position zu überführen, dadurch gekennzeichnet, daß die Rückenlehne eine erste automatische Verriegelungseinrichtung (14, 16) der Rückenlehne (11) in der hinteren Position und eine erste Steuereinrichtung umfaßt, die es erlaubt, diese Rückenlehne (11) freizugeben und sie nach vorn zu verschwenken, um dabei den Winkel, den sie mit dem Sitzteil bildet, zu vermindern, und daß eine zweite Verriegelungseinrichtung, die direkt oder indirekt durch die Rückenlehne im Verlaufe ihrer Verschwenkung betätigt wird, es erlaubt, das Sitzteil freizugeben und es seinerseits aus seiner hinteren stabilen Position bis in eine vordere stabile Position zu schwenken.

2. Sitz nach Anspruch 1, dadurch gekennzeichnet, daß die zweite Steuereinrichtung (26) direkt durch die Rückenlehne (11) im Verlauf ihrer Schwenkbewegung auf das Sitzteil betätigt wird und von einem Kabel (26) gebildet ist, deren eines Ende an der Rückenlehne (11) befestigt ist, während das andere Ende an der zweiten Verriegelungseinrichtung (22) befestigt ist, wobei die Länge und die Position des Kabels (26) derart bemessen sind, daß es das Öffnen der zweiten Verriegelungseinrichtung (22) hervorruft.

3. Sitz nach Anspruch 1 oder 2, dadurch gekennzeichnet, daß die zweite Verriegelungseinrichtung (22) an wenigstens einem der Schwingarme (5) befestigt ist, die die Verbindung zwischen Sitzteil und Chassis herstellen.

4. Sitz nach Anspruch 3, dadurch gekennzeichnet, daß die zweite Verriegelungseinrichtung von einem Haken (22) gebildet ist, der an einem Schwingarm (5) angelenkt ist und in einen Zapfen (25) eingreift, der an dem Chassis oder an dem Sitzteil angeordnet ist.

5. Sitz nach Anspruch 3 oder 4, dadurch gekennzeichnet, daß der Schwingarm, an dem die zweite Verriegelungseinrichtung befestigt ist, ein hinterer Schwingarm (5) ist.

6. Sitz nach einem der Ansprüche 1 bis 5, dadurch gekennzeichnet, daß die erste Verriegelungseinrichtung (14, 16) eine Verriegelung zwischen dem Sitzteil (1) und der Rückenlehne (11) bewirkt.

7. Sitz nach Anspruch 6, dadurch gekennzeichnet, daß die erste Steuereinrichtung (18) an der Rückenlehne angebracht ist.

8. Sitz nach einem der Ansprüche 1 bis 7, dadurch gekennzeichnet, daß die Automatik der ersten und/oder der zweiten Verriegelungseinrichtung durch Rückstellfedern (17, 24) bewirkt wird.

9. Sitz nach einem der Ansprüche 1 bis 8, dadurch gekennzeichnet, daß wenigstens eine Feder (29) ein Drehmoment auf wenigstens einen Schwingarm in der Richtung hervorruft, die die Verstellung des Sitzteils (1) nach vorn hervorruft.

10. Sitz nach Anspruch 1 oder 2, dadurch gekennzeichnet, daß die zweite Verriegelungseinrichtung direkt oder indirekt an dem Sitzteil (1) angebracht ist.

**Claims**

1. Retractable seat of the type comprising a rigid reinforcement made up of a seat base (1) and a seat back (11), the seat base being mounted directly or indirectly on an underframe by means of link connection rods (4, 5) distributed between the front and the rear of the seat base (1) enabling the seat base to pass from a stable rear position to a stable front position, the seat back (11) being mounted on the seat base (1) by a link connection (12), with means enabling locking of the seat base and the seat back to be ensured in the rear position and control means enabling this seat base and this seat back to be freed in order to cause them to pass from the stable rear position to the stable front position, **characterised in that** the seat back comprises a first automatic locking means (14, 15) for locking the seat back (11) in the rear position and a first control means enabling this seat back (11) to be freed and to be folded forwards, reducing the angle formed between it and the seat base, and in that a second control means actuated directly or indirectly by the seat back in the course of its folding enables the seat base to be freed and then to be tilted from its stable rear position into a stable front position.

2. Seat according to claim 1, characterised in that the second control means (26) is actuated directly by the seat back (11) in the course of its movement of folding down on to the seat base (1) and is formed by a cable (26), one end of which is attached to the seat back (11), the other end being attached to the second locking means (22), the length and position of the cable (26) being calculated so that it causes the second locking means (22) to open.

3. Seat according to claim 1 or 2, characterised in that the second locking means (22) is mounted on at least one of the connection rods (5) ensuring the connection of the seat base and the underframe.

4. Seat according to claim 3, characterised in that the second locking means is formed by a hook (22) flexibly connected to a connection rod (5) which comes to engage a stud (25) positioned on the underframe or on the seat base.

5. Seat according to claim 3 or 4, characterised in that the connection rod on which the second locking means is mounted is a rear connection rod (5).

6. Seat according to one of claims 1 to 5, characterised in that the first locking means (14, 16) ensures locking between the seat base (1) and the seat back (11).

7. Seat according to claim 6, characterised in that the first control means (18) is mounted on the seat back.

8. Seat according to one of claims 1 to 7, characterised in that the automatic action of the first and/or second locking means is ensured by return springs (17, 24).

9. Seat according to one of claims 1 to 8, characterised in that at least one spring (29) exerts torque on at least one connection rod in the direction which causes the seat base (1) to move forward.

10. Seat according to claim 1 or 2, characterised in that the second locking means is mounted directly or indirectly on the seat base (1).

Fig.1

Fig. 2

Fig. 3

Fig. 4